# EUROPÄISCHE PATENTSCHRIFT

(11) **EP 2 043 889 B1**
(45) Veröffentlichungstag und Bekanntmachung des Hinweises auf die Patenterteilung: **07.05.2014**
(21) Anmeldenummer: 07786233.2
(22) Anmeldetag: 20.07.2007
(51) Int. Cl.: B60R 13/04

(54) **VORRICHTUNG ZUR ABDECKUNG EINER DACHSEITIGEN SCHWEISSRILLE AN EINER FAHRZEUGKAROSSERIE**
DEVICE FOR COVERING A ROOF WELDING GROOVE ON A VEHICLE BODY
DISPOSITIF DE RECOUVREMENT D'UNE RAINURE DE SOUDURE DU COTÉ DU TOIT D'UNE CARROSSERIE DE VÉHICULE

(30) Priorität: 22.07.2006 DE 102006034015
(43) Veröffentlichungstag der Anmeldung: 08.04.2009
(73) Patentinhaber: Daimler AG, 70327 Stuttgart (DE); DURA Automotive Body & Glass Systems GmbH, 58840 Plettenberg (DE)
(72) Erfinder: ERNEY, Thomas, 71034 Böblingen (DE); FITTERER, Holger, 76287 Rheinstetten (DE); HUETTEMEISTER, Roger, 57368 Lennestadt (DE); KOENIG, Andreas, 59846 Sundern (DE); REUNER, Gerd, 58791 Werdahl (DE); TILLMANN, Frank, 70174 Stuttgart (DE)
(74) Vertreter: Zinnecker, Armin
(86) Internationale Anmeldenummer: PCT/EP2007/006485
(87) Internationale Veröffentlichungsnummer: WO 2008/012036

(56) Entgegenhaltungen:
- EP-A- 0 386 986
- EP-A- 1 498 318
- DE-A1- 3 313 962
- DE-A1- 4 424 803
- DE-A1- 4 424 957
- US-A- 6 143 397
- US-A1- 2002 101 096

## Beschreibung

Die Erfindung betrifft eine Vorrichtung zur Abdeckung einer dachseitigen Schweißrille an einer Fahrzeugkarosserie mit einem Zierstab wie er beispielsweise als Wasserabweiser in einer Schweißkanalrinne im Fügebereich des Dachs einer Fahrzeugkarosserie Verwendung findet. Dabei soll der Zierstab mit einem hier nicht näher beschriebenen Rastkörper lösbar in der Schweißrille der Karossrie verankert sein.

Des Weiteren betrifft die Erfindung ein Verfahren zur Befestigung einer Dichtlippe an einem Zierstab.

Der zierstab ist dermaßen ausgebildet, dass er mit seinen beiden äußeren Seiten beabstandet zu den Rändern der Schweißrille eingepasst ist. In den Leerräumen zwischen Zierstab und den Rändern der Schweißrille werden Gummidichtungen eingefügt. Diese Gummidichtungen haben einerseits zur Aufgabe die Schweißrille gegen Regen und Schmutz abzudichten. Da die Zierstäbe auch an optisch exponierten Stellen des Fahrzeugs liegen und durch ihr Erscheinungsbild den Werteindruck des Fahrzeuges mitbestimmen, haben die Gummidichtungen auch die Aufgabe, die meist hochglänzend ausgeführten Zierstäbe in einem sauberen Erscheinungsbild zu fassen. Dazu muss die Gummidichtung möglichst parallel zu den Kanten von Zierstab und Schweißrille liegen sowie die Schweißrille vollständig bedecken, damit es dem außenstehenden Betrachter nicht möglich ist, durch einen Spalt zwischen Rand der Schweißrille und Gummidichtung in die Schweißnaht zu sehen.

Die Zierstäbe werden in der Herstellung meist gewalzt, rollgewalzt, extrudiert oder tiefgezogen. In den meisten Fällen haben sie einen annähernd C-förmig taschenartigen Querschnitt. In einem darauf folgenden Arbeitsschritt wird auf das Trägerprofil des Zierstabs die meist hochglänzende Abdeckung des Zierstabs als Lack oder Folie aufgebracht.

Seitens der Halterung der Zierleiste zeigt die DE 83 08 768 Ul einen Rastkörper aus Kunststoff zur Halterung von im Querschnitt C-förmigen Zierstäben in einer Schweißkanalrinne einer Dachbeplankung. Zwischen Zierleiste und Karosseriewand ist ein Dichtungsstreifen angeordnet, der jedoch in dieser Ausführung nicht sichtbar ist. Selbst ein breiterer Dichtungsstreifen würde über die ganze Länge des Zierstabs kein sauberes Erscheinungsbild ergeben, da der Anpressdruck der Zierleiste auf der Karosseriewand über die gesamte Länge nur schwierig gleichmäßig einstellbar wäre.

Auch in der DE 297 16 729 Ul ist eine Dichtauflage unsichtbar zwischen der Zierleiste und dem Seitenwandrahmen eingeklemmt. Eine breitere Dichtauflage würde nur zu einem über die gesamte Länge der Zierleiste unregelmäßigen Hervorquellen der Dichtauflage und damit zu einem unakzeptablen Erscheinungsbild führen.

Bei der DE 100 29 544 Al ist die Dichtlippe als elastomere Zwischenlage zwischen dem Zierstab und der Karosserie als extra Bauteil ohne Verbindung zum Zierstab eingeklemmt. Seitens des Verfahrens zur Befestigung einer Dichtlippe an einem Zierstab zeigt die DE 102 19 957 Al eine Dichtlippe welche in die Zierstababdeckung formschlüssig seitlich eingeschoben oder längsseitig eingedrückt werden muss.

Auch bei der DE 43 22 730 C2 wird die Kopfleiste über die gegenüberliegenden Stecknasen in einem extra Arbeitsgang gedrückt, um dem als Dichtlippe fungierenden Profilabschnitt im Fuß der Zierblende Halt zu geben.

Die DE 33 13 962 A1 offenbart eine Vorrichtung zur Abdeckung einer dachseitigen Schweißrille an einer Fahrzeugkarosserie mit einem Zierstab mit einer an einer Seite des Zierstabs verbundenen Dichtlippe, wobei die elastische Dichtlippen einen ebenfalls elastischen T-förmigen äußeren Rand aufweist.

Aus der US 2002/101096 A1 ist eine Vorrichtung nach dem Oberbegriff des Anspruchs 1 bekannt.

Vor diesem Hintergrund liegt der vorliegenden Erfindung daher die Aufgabe zugrunde, einen Zierstab mit seitlichen Dichtlippen der eingangs genannten Art so auszuführen, dass das optische Erscheinungsbild und das Design der Dachbeplankung einwandfrei darstellbar ist und die Dichtigkeit des Zierstabs auch als Wasserabweiser über der Schweißrille gewährleistet ist.

Diese Aufgabe wird erfindungsgemäß durch die Merkmale des Anspruchs 1 gelöst. Ein Vorteil der Erfindung liegt in dem designseitig einwandfreien Erscheinungsbild des zierstabs auf der Karosserie ohne Spalte zwischen den Rändern der Schweißrille und dem Zierstab durch den beim Einpassen der elastischen Dichtlippe hochgeklappten ebenfalls elastischen T-förmigen äußeren Rand der Dichtlippe. Erfindungsgemäß weist der der Fahrzeugkarosserie zugewandten Seite äußere T-förmige Rand eine J-förmige von der Dichtlippe abgewandte Krümmung auf, um bei der Montage des Zierstabes in die Schweißrille ein Umschlagen in die falsche Richtung oder ein Zerknittern des T-förmigen äußeren Randes der Dichtlippe zu verhindern.

Dabei zeigen:
- Fig. 1: einen Querschnitt eines Zierstabs in einer Schweißrille einer Fahrzeugkarosserie vor(1a) und nach(1b) dem Einsetzen des Zierstabs mit herkömmlichen Dichtlippen als Stand der Technik
- Fig. 2: einen Querschnitt eines Zierstabs in einer Schweißrille einer Fahrzeugkarosserie vor(2a) und nach(2b) dem Einsetzen des Zierstabs mit den erfindungsgemäßen T-förmigen Dichtlippen
- Fig. 3: eine Prinzipskizze des Rolliervorgangs

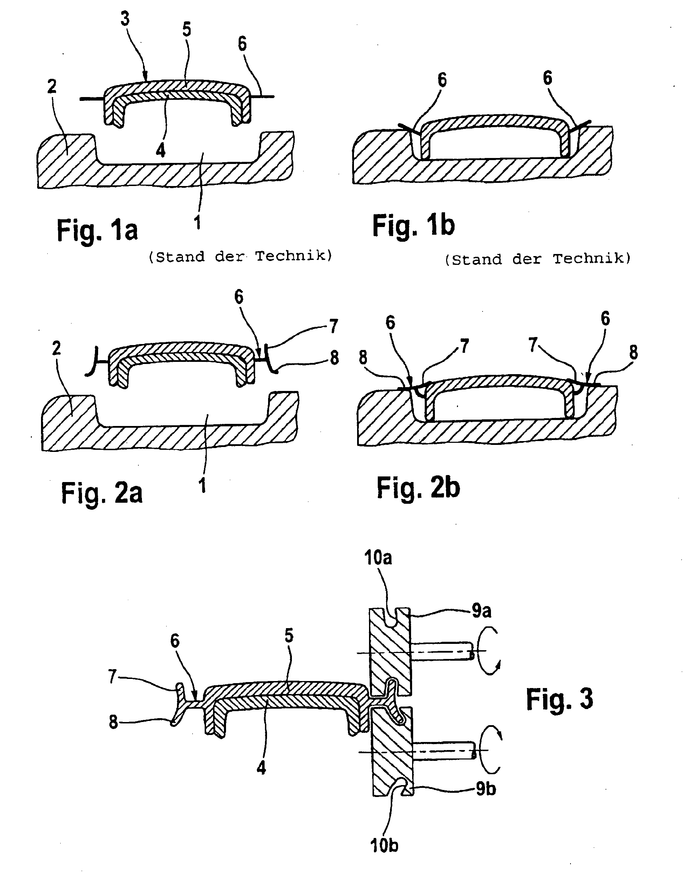

Fig. la zeigt als Stand der Technik den Querschnitt eines Zierstabs 3 in einer Schweißrille 1 einer ebenfalls im Querschnitt dargestellten Fahrzeugkarosserie 2 vor dem Einsetzen des Zierstabs 3 mit herkömmlichen Dichtlippen 6. Fig. 1b zeigt als Stand der Technik die Einbaulage nachdem der Zierstab 3 in die Schweißrille 1 gedrückt wurde. Es liegen nun die an den Seiten des Zierstabs 3 angebrachten Dichtlippen 6 auf den oberen Kanten der Schweißrille 1 auf und dichten den Raum zwischen den äußeren Rändern des Zierstabs 3 und den Begrenzungen der Schweißrille 1 gegen das Eindringen von Flüssigkeiten und Staub ab. Eventuell auftretende Unregelmäßigkeiten in der Parallelität der oberen Kanten der Schweißrille 1 können hierbei jedoch zu einen nicht ganz einwandfreien Erscheinungsbild des Zierstabs 3 und somit des gesamten Dachbildes führen.

Fig. 2a zeigt in einer Schweißrille 1 den Querschnitt eines Zierstabs 3 einer auch im Querschnitt dargestellten Fahrzeugkarosserie 2 vor dem Einsetzen des Zierstabs 3 mit erfindungsgemäßen T-förmigen Dichtlippen 6. Der der Fahrzeugkarosserie 2 zugewandte äußere Rand 8 der Dichtlippen 6 weist eine J-förmige von der Dichtlippe abgewandte Krümmung auf; diese Formgebung verhindert bei der Montage des Zierstabes 3 in die Schweißrille 1 ein Umschlagen in die falsche Richtung oder ein zerknittern des T-förmigen äußeren Randes der Dichtlippe.

Fig. 2b zeigt die Einbaulage nachdem der Zierstab 3 in die Schweißrille 1 gedrückt wurde. Dabei sind die elastischen Dichtlippen 6 hochgeklappt; die ebenfalls elastischen T-förmigen äußeren Ränder der Dichtlippen 7 und 8 dichten den Raum zwischen den äußeren Rändern des Zierstabs 3 und den Begrenzungen der Schweißrille 1 gegen das Eindringen von Wasser und Staub ab. Eventuell auftretende Unregelmäßigkeiten in der Parallelität der Kantenabdeckungen werden durch die vollständige Überdeckung der Kanten durch die Dichtlippe 6 kaschiert.

Fig. 3 zeigt eine Prinzipskizze des Rolliervorgangs. Während die heiße, flüssige Masse der Abdeckschicht 5 auf das Trägerprofil 4 des erhitzten Zierstab aufgebracht wird, formt eine Aussparung 10a in der rotierenden, gekühlten oberen walze 9a den obenliegenden Teil des äußeren Randes der Dichtlippe 7 und synchron formt eine Aussparung 10b in der unteren rotierenden, gekühlten Walze 9b den J-förmig gekrümmten untenliegenden Teil des äußeren Randes der Dichtlippe 8.

## Patentansprüche

1. Vorrichtung zur Abdeckung einer dachseitigen Schweißrille (1) an einer Fahrzeugkarosserie (2) mit einem Zierstab (3) mit mindestens einer an zumindest einer Seite des Zierstabes (3) verbundenen, elastischen, T-förmigen Dichtlippe (6),
wobei die elastische Dichtlippe (6) bei der Montage des Zierstabs (3) in die Schweißrille (1) hochgeklappt wird, so daß die äußeren Ränder (7, 8) der T-förmigen Dichtlippe (6) den Raum zwischen dem äußeren Rand des Zierstabs (3) und der Begrenzung der Schweißrille (1) abdichtet,
**dadurch gekennzeichnet,**
**daß** die Abdichtung durch eine vollständige Überdeckung der Kanten des äußeren Rands des Zierstabs (3) und der Begrenzung der Schweißrille (1) erfolgt.

2. Vorrichtung nach Anspruch 1, **dadurch gekennzeichnet, daß** der äußere Rand (7) auf der der Fahrzeugkarosserie (2) zugewandten Seite eine J-förmig von der Dichtlippe (6) abgewandte Krümmung (8) aufweist.

3. Vorrichtung nach Anspruch 1 und 2, **dadurch gekennzeichnet, daß** die Außenkanten des Zierstabes (3) und die Begrenzungen der Schweißrille (1) in der Fahrzeugkarosserie (2) im montierten Zustand der Vorrichtung zueinander beabstandet sind.

## Claims

1. Device for covering a roof welding groove (1) on a vehicle body (2) having a trim strip (3) with at least one elastic, T-shaped sealing lip (6) that is connected to at least one side of the trim strip (3),
wherein the elastic sealing lip (6) is folded up into the welding groove (1) during the assembly of the trim strip (3), such that the outer borders (7, 8) of the T-shaped sealing lip (6) seal the space between the outer border of the trim strip (3) and the boundary of the welding groove (1),
**characterised in that**
the sealing occurs using a complete overlapping of the edges of the outer border of the trim strip (3) and the boundary of the welding groove (1).

2. Device according to claim 1, **characterised in that** the outer border (7) has a J-shaped curve (8) facing away from the sealing lip (6) on the side facing towards the vehicle body (2).

3. Device according to claim 1 and 2, **characterised in that** the outer edges of the trim strip (3) and the boundaries of the welding groove (1) are at a distance to one another in the vehicle body (2) in the assembled state of the device.

## Revendications

1. Dispositif de recouvrement d'une rainure de soudure (1) du côté du toit d'une carrosserie de véhicule, comprenant une barrette décorative (3) avec au moins une lèvre d'étanchéité (6) élastique en forme de T solidaire d'au moins un côté de la barrette décorative (3),
la lèvre d'étanchéité (6) étant soulevée lors du montage de la barrette décorative (3) dans la rainure de soudure (1), de manière que les bords extérieurs (7, 8) de la lèvre d'étanchéité (6) en forme de T rendent étanche l'espace entre le bord extérieur de la barrette décorative (3) et la limite de la rainure de soudure (1),
**caractérisé en ce que**
l'étanchéité est obtenue par un recouvrement complet du bord extérieur de la barrette décorative (3) et de la limite de la rainure de soudure (1).

2. Dispositif selon la revendication 1, **caractérisé en ce que** le bord extérieur (7) situé du côté de la carrosserie du véhicule (2) présente une courbure en J (8) se détournant de la lèvre d'étanchéité (6).

3. Dispositif selon la revendication 1 et 2, **caractérisé en ce que** les bords extérieurs de la barrette décorative (3) et les limites de la rainure de soudure (1) dans la carrosserie de véhicule (2) sont espacés les uns des autres lorsque le dispositif est monté.
